# EUROPÄISCHE PATENTSCHRIFT

(11) **EP 0 638 148 B1**
(45) Veröffentlichungstag und Bekanntmachung des Hinweises auf die Patenterteilung: **02.04.1997**
(21) Anmeldenummer: 93911425.2
(22) Anmeldetag: 28.04.1993
(51) Int. Cl.: F16C 27/02, F16C 11/04, F16C 33/10

(54) **GEROLLTE LAGERBUCHSE UND ZAPFEN- ODER WELLENVERBINDUNG MIT EINER SOLCHEN LAGERBUCHSE**
ROLLED BEARING BUSH AND JOURNAL OR SHAFT CONNECTION WITH SUCH A BEARING BUSH
COUSSINET ENROULE ET ASSEMBLAGE D'AXE OU D'ARBRE REALISE A L'AIDE D'UN COUSSINET ENROULE DE CE TYPE

(30) Priorität: 28.04.1992 DE 4213831
(43) Veröffentlichungstag der Anmeldung: 15.02.1995
(73) Patentinhaber: GLYCO-METALL-WERKE Glyco B.V. & Co. KG, 65201 Wiesbaden (DE)
(72) Erfinder: SCHULZE-EYSSING, Heinz, D-6909 Dielheim 2 (DE); MUNDIL, Erhardt, D-6909 Walldorf (DE)
(86) Internationale Anmeldenummer: DE9300379
(87) Internationale Veröffentlichungsnummer: WO9322574

(56) Entgegenhaltungen:
- DE-A- 2 310 592
- DE-C- 726 557
- FR-A- 222 023
- FR-A- 2 217 585
- FR-A- 2 376 329
- FR-A- 2 432 646
- US-A- 3 980 352

## Beschreibung

Die Erfindung betrifft eine gerollte Lagerbuchse aus elastischem Material als Lagerung für einen Zapfen oder eine Welle zum Einpressen in eine Lagerbohrung. Die Erfindung betrifft auch eine Zapfen- oder Wellenverbindung mit einem ersten und einem zweiten Bauteil, wobei das erste Bauteil eine Lagerbuchse trägt und das zweite Bauteil mit einem in der Lagerbuchse gelagerten Zapfen oder einer Welle verbunden ist.

Gerollte Lagerbuchsen werden unter anderem in der Kraftfahrzeugtechnik zur Lagerung von Kfz-Türen eingesetzt. Bei diesen Anwendungsfällen ist die Lagerbuchse naturgemäß keinen hohen Drehzahlen ausgesetzt, sondern sie muß andere Kriterien erfüllen, wie beispielsweise Spielfreiheit und große Tragfähigkeit. Insbesondere dann, wenn eine Kfz-Tür geöffnet ist, wirken aufgrund des Gewichtes der Kfz-Tür größere radiale Kräfte auf die Lagerbuchse.

Eine solche Lagerbuchse ist beispielsweise aus der DE-A-40 10 466 bekannt, die eine Lagerung für Kraftfahrzeugtüren beschreibt. Es wird eine geschlitzte Lagerhülse mit radial nach außen vorstehenden Federzungen beschrieben, deren freie Enden in eine Umfangsnut eines in die Hülse gesteckten Bolzens eingreifen. Die Federzungen werden beim Einsetzen der Lagerhülse radial nach außen gespreizt und damit an die Wandung der Lagerbohrung angedrückt. Die Federzungen haben den Nachteil, daß die Federkraft nach relativ kurzer Zeit nachläßt und die Buchse nicht mehr spielfrei in der Gehäusebohrung sitzt. Darüber hinaus ist die Herstellung der Federzungen relativ aufwendig und die wirksamen Tragflächen, die sich auf die Anlageflächen der Federzungen beschränken, sind nicht groß genug um größere Kräfte aufnehmen zu können.

Ähnliche Lagerbuchsen mit Federzungen sind auch aus der DE-A-39 01 283 bekannt.

In der DE-C-14 00 846 wird eine Steckbuchse aus Kunststoff beschrieben, die an ihrer Außenseite Rippen aufweist. Beim Einstecken der Buchse in eine entsprechende Bohrung werden diese Rippen verformt, wodurch ein strammer Sitz in der Öffnung des Werkstückes erzielt werden soll. Eine solche Ausgestaltung läßt sich mit gerollten Buchsen jedoch nicht herstellen.

Die DE-A-23 03 051 betrifft eine mehrfach geschlitzte Lagerhülse mit einem zylindrischen und einem kegelförmigen Abschnitt. Beim Einführen des Zapfens einer Welle werden die Segmente des kegelförmigen Abschnitts nach außen gedrückt, so daß die Lagerbüchse in der Bohrung eingeklemmt wird. Hierbei liegen ausschließlich die Enden der Segmente an dem Zapfen an, so daß an dieser Stelle im Betrieb eine schnelle und große Abnutzung eintritt.

Die DE-A-37 33 126 beschreibt einen gerollten mehrwandigen Lagerbolzen, der in einem Abschnitt seiner Umfangswand eine in Umfangsrichtung weisende Zunge aufweist, womit ein Durchmesserunterschied zwischen einer Öffnung im Türhalteband und der Gehäusebohrung des Lagerbocks ausgegleichen werden soll. Dadurch sollen größere Toleranzen ermöglicht werden, ohne daß ein Lagerspiel zwischen der Gehäusebohrung und den Bohrungen in der Öffnung im Türghalteband auftritt. Auch diese Ausgestaltung besitzt die bekannten Nachteile.

Aus der US-A-3,319,484 ist eine Lagerung einer Potentiometerwelle bekannt, die verhindern soll, daß sich die Welle von selbst verdreht, wenn das Gerät, in das das Drehpotentiometer eingebaut ist, vibriert. Andererseits muß sich die Welle leicht drehen lassen. Zu diesem Zweck besitzt die Buchse eine Aussparung, in die eine Feder mit im wesentlichen dreieckiger Gestalt eingesetzt wird, wobei die runden Ecken des Dreiecks an der Innenseite der Buchsenaussparung und die Schenkel des Dreiecks an der Welle anliegen. Dieses Federelement dient lediglich als Drehsicherung und besitzt keine Lagerfunktion, die gemäß US-A-3.319,484 von einer an die Welle angepaßten Buchsenbohrung übernommen wird.

Die DE-A-2 310 592 betrifft ein hochbelastbares, spielfreies Trockengleitlager, welches insbesondere Kippkräfte einer Welle oder Achse sicher aufnehmen soll. Hierbei wird in die Bohrung ein im unverformten Zustand ebener Lagerstreifen unter Beibehaltung seiner Rückstellkraft eingespreizt, der seinen Preßsitz ausschließlich durch die Rückstellkraft des gesamten Lagerstreifens erhält. Ein dauerhafter Preßsitz wird hierdurch nicht erreicht.

Aufgabe der Erfindung ist eine gerollte Lagerbuchse, die in die Gehäusebohrung eingepreßt ist, wobei der Zapfen oder die Welle spielfrei gelagert sein soll, und deren Tragflächen größer sein sollen als bei den bekannten Lagerbuchsen, wobei die Lagerbuchse auch auf einfache Weise herstellbar sein soll. Aufgabe der Erfindung ist auch eine Zapfen- oder Wellenverbindung, die ein spielfreies Verschwenken zweier Bauteile ermöglicht.

Diese Aufgabe wird mit einer Lagerbuchse gemäß Anspruch 1 und einer Zapfen- oder Wellenverbindung gemäß Anspruch 2 gelöst. Die fertige Lagerbuchse weist einen im wesentlichen kreisförmigen Querschnitt auf. Durch die gezielte Verformung der Lagerbuchse wird nun erfindungsgemäß diese Kreisform verlassen, so daß bestimmte Abschnitte der Buchse gegenüber der ursprünglichen Kreisform nach außen vorstehen. Die gezielte Verformung muß nicht die gesamte Lagerbuchse erfassen, wichtig ist jedoch, daß der verformte Bereich sich über die gesamte Buchsenlänge erstreckt. Dadurch wird erreicht, daß beim Einsetzten der Lagerbuchse in die Gehäusebohrung über die gesamte axiale Länge der Lagerbuchse ein gleichmäßiger Preßsitz vorliegt. Beim Stand der Technik ist dieser Bereich im allgemeinen lediglich auf die nach außen vorstehenden Zungen beschränkt. Die erfindungsgemäße Verformung bietet somit den Vorteil, daß die Formelastizität der gesamten Buchse ausgenutzt werden kann, was sich insbesondere positiv auf die Lebensdauer des Preßsitzes auswirkt. Es konnte festgestellt werden, daß die Lagerbuchse auch nach langem Einsatz, z.B. in Türscharnieren von Kfz-Türen keinerlei Spiel aufweist. Zudem läßt sich eine Verformung der Lagerbuchse ohne großen technischen Aufwand durchführen, so daß die Herstellungskosten im üblichen Rahmen liegen.

Beim Einsetzen der die gezielte Verformung aufweisenden Lagerbuchsen in die Gehäusebohrung werden der oder die Abschnitte der Buchse, die gegenüber der Kreisform nach außen vorstehen, auf die durch die Gehäusebohrung vorgegebene Kreisform zurückgeführt. Hierbei treten zwei vorteilhafte Effekte auf.

Zum einen werden die Abschnitte, mit denen die Buchse nicht mit ihrer Außenfläche an der Wandung der Gehäusebohrung anliegt, gezielt zur Führung des Zapfens oder der Welle eingesetzt. Je nach Art der Verformung kann der Zapfen oder die Welle zusätzlich auch in den Abschnitten an der Innenfläche der Lagerbuchse anliegen, die mit der Wandung der Gehäusebohrung in Kontakt sind. Der Anteil der Umfangsabschnitte, die weder zum Preßsitz noch zur Führung und Lagerung des Zapfens oder der Welle beitragen wird somit minimiert.

Zum anderen werden durch das flächige Anliegen der Buchse an der Wandung der Gehäusebohrung eine oder mehrere äußere Tragflächen gebildet, die große radial wirkende Kräfte aufnehmen können, ohne daß die Spielfreiheit verlorengeht. Die Größe der so gebildeten Anlagefläche hängt von der gewählten Deformation der Lagerbuchse ab. Die Anlageflächen sowohl zwischen Lagerbuchse und Gehäusebohrung als auch zwischen Lagerbuchse und Zapfen oder Welle, sind in allen Fällen größer als bei den Lagerbuchsen gemäß dem Stand der Technik, so daß die Belastbarkeit der Lagerbuchse deutlich größer ist.

Durch den Herstellungsvorgang bedingt besitzen die gerollten noch nicht kalibrierten Lagerbuchsen im wesentlichen gerade Umfangsabschnitte, die sich an der Stoßfuge berühren. Hierbei bilden die geraden Umfangsabschnitte einen Winkel <180°. Diese fertigungsbedingte Ausrichtung der Umfangsabschnitte wird i.a. als Dachform bezeichnet. Die Verformung der Lagerbuchse besteht nun darin, diese Dachform gezielt zu überhöhen. Dadurch wird erreicht, daß die Platinenenden so weit gegenüber der Kreisform nach außen vorstehen, daß beim Einsetzen in die Gehäusebohrung die Lagerbuchse zumindest mit der Hälfte ihrer Außenfläche an der Wandung der Gehäusebohrung anliegt. Dadurch wird eine äußere Tragfläche gebildet, die sich über mehr als den halben Umfang der Lagerbuchse erstreckt, wobei die Lagerbuchse hierbei auch mit ihren Platinenenden an der Wandung der Gehäusebohrung anliegt. Gleichzeitig liegen die geraden Umfangsabschnitte, die nicht mit der Wandung der Gehäusebohrung in Berührung kommen können, an dem Zapfen oder der Welle an, der oder die außerdem mit einem Großteil seiner oder ihrer Fläche in dem Bogenabschnitt an der Innenseite der Lagerbuchse anliegt, dessen Außenseite die äußere Tragfläche bildet. Insgesamt ist ein Großteil der Gesamtfläche der Lagerbuchse aufgrund der erzeugten Vorspannung entweder in Anlage mit der Wandung der Gehäusebohrung (äußere Tragflächen) oder in Anlage mit dem zu lagernden Bolzen oder Zapfen oder der Welle (innere Tragflächen).

Die erfindungsgemäße Zapfen- oder Wellenverbindung mit einem ersten und einem zweiten Bauteil, wobei das erste Bauteil eine Lagerbuchse trägt und das zweite Bauteil mit einem in der Lagerbuchse gelagerten Zapfen- oder Welle verbunden ist, macht von der erfindungsgemäßen, gerollten Lagerbuchse Gebrauch, wobei die Lagerbuchse derart im ersten Bauteil ausgerichtet ist, daß die maximale, auf die Lagerbuchse wirkende Radialkraft F des zweiten Bauteils im Bereich einer der äußeren Anlageflächen und damit Tragflächen angreift.

Diese gezielte Einbaulage der Lagerbuchse empfiehlt sich dann, wenn die Buchse extremen Belastungen ausgesetzt ist.

Gemäß einer vorteilhaften Ausführungsform ist die Verformung gezielt in der Weise eingestellt, daß die Lagerbuchse eine polygonale Gestalt aufweist, wobei ein Polygon mit drei Polygonpunkten bevorzugt ist. Zwischen den Polygonpunkten verläuft die Buchsenwandung abgeflacht aber noch gekrümmt, wobei die Polygonpunkte in nicht eingebautem Zustand gegenüber der Kreisform nach außen vorstehen.

Diese polygonale Verformung erfaßt die gesamte Lagerbuchse, so daß beim Einsetzen der Lagerbuchse in die Gehäusebohrung die durch die Polygonpunkte beschriebenen, sich axial erstreckenden Außenflächenbereiche der Lagerbuchse radial nach innen gedrückt werden. Diese Außenflächenbereiche bilden die äußeren Tragflächen, wobei die zwischen den Polygonpunkten befindlichen Wandabschnitte mit einem Teil ihrer Innenflächen an dem zu lagernden Zapfen oder Welle anliegen und somit die inneren Tragflächen bilden. Durch diese Art der Verformung wird eine gleichmäßige Verteilung der Tragflächen auf den Gesamtumfang der Lagerbuchse erzielt. Vorzugsweise werden die Polygonpunkte so gelegt, daß sich einer der Polygonpunkte im Bereich der Platinenenden befindet.

Die Verformung der Lagerbuchse ist so eingestellt, daß der Maximalabstand zwischen der Außenfläche der Lagerbuchse und der Wandung der Gehäusebohrung im wesentlichen <5/100 mm vorzugsweise <1/100 mm beträgt, wobei diese Werte vom Durchmesser der Buchse abhängig sind. Diese Abstände gelten auch für die Zwischenräume zwischen dem Zapfen bzw. der Welle und der Innenfläche der Lagerbuchse.

Die Lagerbuchse kann auch mit einem Kragen versehen sein, wobei zum Sichern gegen Verdrehen wenigstens ein Kragenende zum Eingreifen in eine neben der Gehäusebohrung befindlichen Ausnehmung umgebogen ist oder das Kragenende mit einer Anstauchung neben der Gehäusebohrung zusammenwirkt.

Wenn die Verformung gewählt ist, die die Überhöhung der Dachform betrifft, so kann die Lagerbuchse in der Weise in der Zapfen- oder Wellenverbindung ausgerichtet sein, daß die maximale Radialkraft F auf den der Stoßfuge gegenüberliegenden Buchsenabschnitt einwirkt, da sich dort die äußere Haupttragfläche befindet.

Wenn die polygonale Verformung gewählt ist, kann die Lagerbuchse in der Weise ausgerichtet sein, daß die maximale Radialkraft F im Bereich einer der Polygonpunkte angreift.

Ein bevorzugtes Anwendungsgebiet der Zapfen- oder Wellenverbindung sind Scharniere, insbesondere solche von Kfz-Türen. Die Lagerbuchse wird bei diesen Anwendungsfällen in der Weise in der Zapfen- oder Wellenverbindung ausgerichtet, daß eine äußere Tragfläche, vorzugsweise die äußere Haupttragfläche, die bei geöffneter Tür wirkenden Radialkräfte aufnimmt.

Beispielhafte Ausführungsformen der Erfindung werden nachfolgend anhand der Zeichnungen näher erläutert.

Es zeigen:
- Figur 1: die perspektivische Darstellung einer Lagerbuchse mit Verformung gemäß einer ersten Ausführungsform,
- Figur 2: die perspektivische Darstellung einer Lagerbuchse mit einer Verformung gemäß einer zweiten Ausführungsform,
- Figur 3: die Draufsicht auf eine Zapfen- oder Wellenverbindung mit einer Lagerbuchse gemäß der ersten Ausführungsform in einer ersten Stellung,
- Figur 4: die Zapfen- oder Wellenverbindung gemäß der Figur 3 in einer zweiten Stellung,
- Figur 5: eine perspektivische Explosionsdarstellung einer Lagerbuchse gemäß der ersten Ausführungsform mit Scharnierbauteilen,
- Figur 6: einen Schnitt durch die in Figur 3 gezeigte Zapfen- oder Wellenverbindung längs der Linie VI-VI,
- Figur 7: einen Schnitt durch die in Figur 3 gezeigte Zapfen- oder Wellenverbindung längs der Linie VII-VII,
- Figur 8: einen Querschnitt einer Lagerbuchse gemäß der zweiten Ausführungsform im nicht eingepreßten Zustand,
- Figur 9: einen Querschnitt einer Lagerbuchse gemäß der zweiten Ausführungsform im eingebauten Zustand.

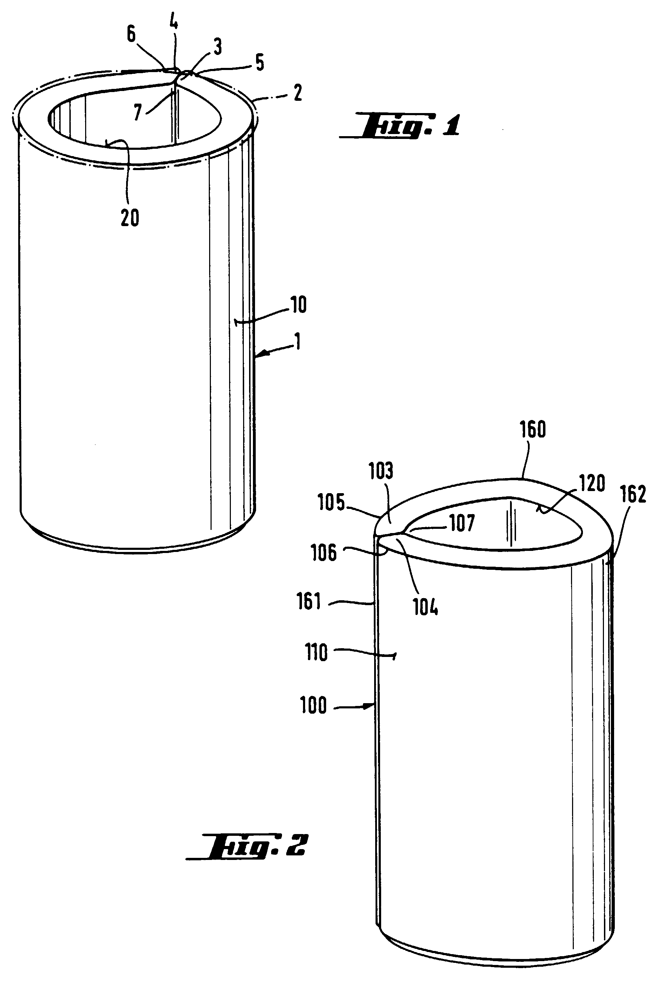

In der Figur 1 ist eine gerollte Lagerbuchse 1 mit einer Verformung gemäß der ersten Ausführungsform perspektivisch dargestellt. Die Lagerbuchse 1 besitzt an ihren Platinenenden 3, 4 im wesentlichen gerade Umfangs-abschnitte 5, 6, die an der Stoßfuge 7 zusammentreffen. Die Umfangs-abschnitte 5, 6 bilden die zuvor beschriebene Dachform, die durch die gezielte Verformung in der Weise überhöht ist, daß die Platinenenden 3, 4 gegenüber der Kreisform 2 nach außen vorstehen.

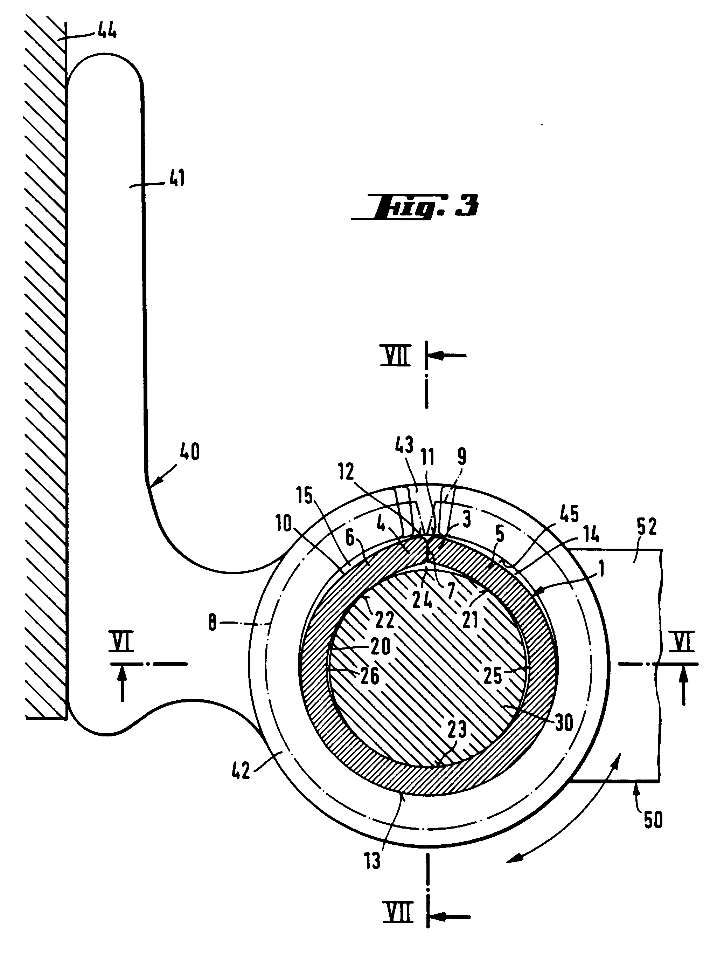

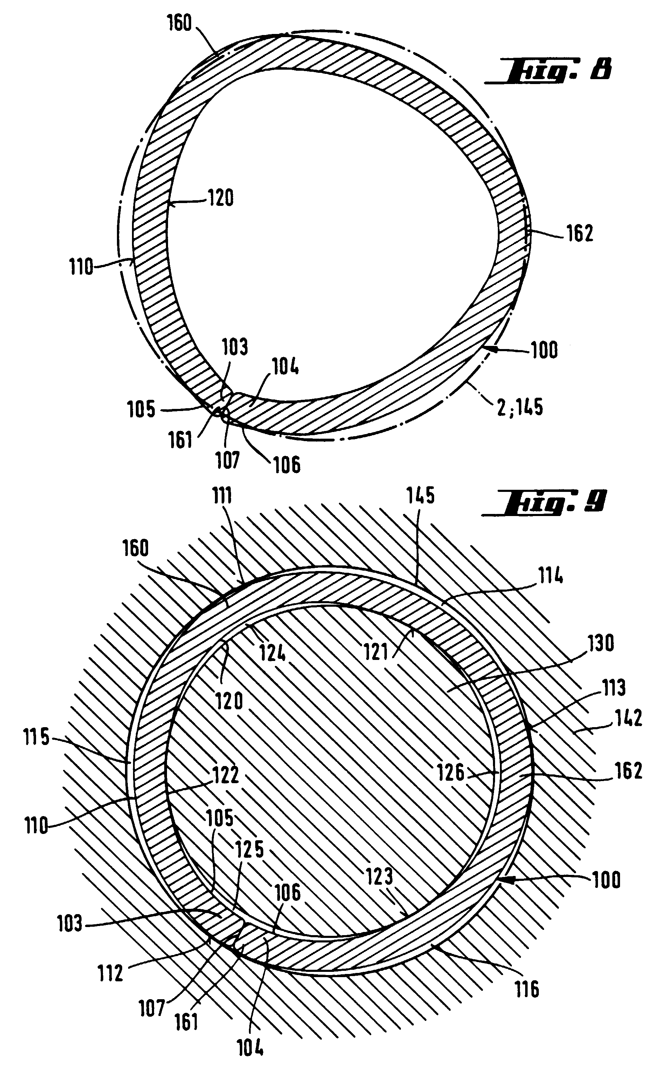

In der Figur 2 ist eine gerollte Lagerbuchse 100 gemäß der zweiten Ausführungsform dargestellt. Die Buchse 100 besitzt im Querschnitt eine polygonale Gestalt, wobei drei Polygonpunkte 160, 161 und 162 vorgesehen sind, die gegenüber der Kreisform 2 nach außen vorstehen (Figur 8). Die Polygonpunkte 160, 161, 162 wurden so gelegt, daß der Polygonpunkt 160 im Bereich der Platinenenden 103, 104 liegt.

Wie in den Figuren 1 und 2 zu sehen ist, erstreckt sich die Verformung jeweils über die gesamte Länge der Buchsen 1, 100, so daß alle durch die Buchsen gelegten Querschnitte identisch sind.

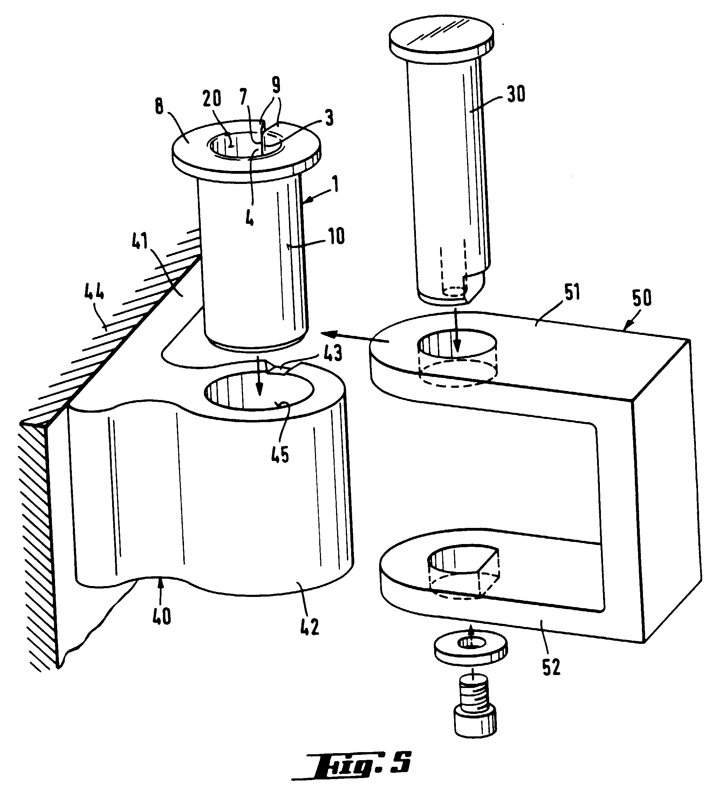

In der Figur 3 ist die Lagerbuchse 1 gemäß der in Figur 1 gezeigten Ausführungsform in eine Verbindung eingesetzt, die in der Figur 5 als Explosionsdarstellung zu sehen ist. Diese Zapfen- oder Wellenverbindung besteht aus einem ersten Scharnierteil 40, das mit einer Scharnierlasche 41 an einer Wand 44 befestigt ist, einem zweiten Scharnierteil 50 sowie einem Bolzen 30. In die Gehäusebohrung 45 eines rund ausgeführten Scharnierkörpers 42 ist die mit der Verformung versehenen Buchse 1 eingesetzt.

Die gegenüber der Kreisform 2 nach außen vorstehenden Platinenenden 3, 4 sind radial nach innen auf die Kreisform, die durch die Gehäusebohrung 45 vorgegeben ist, zurückgeführt. Dadurch wird im Zusammenwirken mit der gegenüber der Gehäusebohrung größeren Umfangslänge ein Preßsitz erzeugt, der dazu führt, daß die Lagerbuchse 1 mit ihrer Außenfläche 10 an der Wandung der Gehäusebohrung 45 unter Ausbildung der äußeren Tragfläche 13 flächig anliegt. Diese äußere Tragfläche 13 erstreckt sich über die Hälfte des gesamten Umfangs der Lagerbuchse 1.

Mit ihren Platinenenden 3, 4 liegt die Lagerbuchse 1 unter Ausbildung der Tragflächen 11 und 12 an der Wandung der Gehäusebohrung 45 an. Da die im wesentlichen geraden Umfangsabschnitte 5 und 6 beim Einsetzen der Lagerbuchse 1 in die Gehäusebohrung 45 weitgehend unbeeinflußt bleiben, bilden sich dort äußere Zwischenräume 14 und 15 zwischen der Lagerbuchse 1 und der Wandung der Gehäusebohrung 45. Dies führt dazu, daß der in der Lagerbuchse 1 befindliche Bolzen 30 mit seiner Fläche an der Innenfläche 20 der Lagerbuchse in den Bereichen der geraden Umfangsabschnitte 5 und 6 (inneren Tragflächen 21, 22) anliegt. Gleichzeitig liegt der Bolzen auch in dem Bereich an der Innenfläche 20 der Lagerbuchse 1 (innere Tragfläche 23) an, der die äußere Tragfläche 13 bildet. Die äußere Tragfläche 13 und die innere Tragfläche 23, die in dieser Ausgestaltung die Haupttragflächen bilden, liegen der Stoßfuge 7 gegenüber. Mit den inneren Tragflächen 21, 22, 23 wechseln sich innere Zwischenräume 24, 25, 26 ab.

Die in den Figuren 3, 4, 5 gezeigte Verbindung könnte beispielsweise die Scharnierverbindung einer Kfz-Tür darstellen. In diesem Fall wäre der Bolzen 30 mit den an der Kfz-Tür befestigten oberen und unteren Tragarmen 51, 52 des zweiten Scharnierteils 50 drehfest verbunden. Figur 3 würde die Ausrichtung der Bolzenverbindung bei geschlossener Kfz-Tür darstellen.

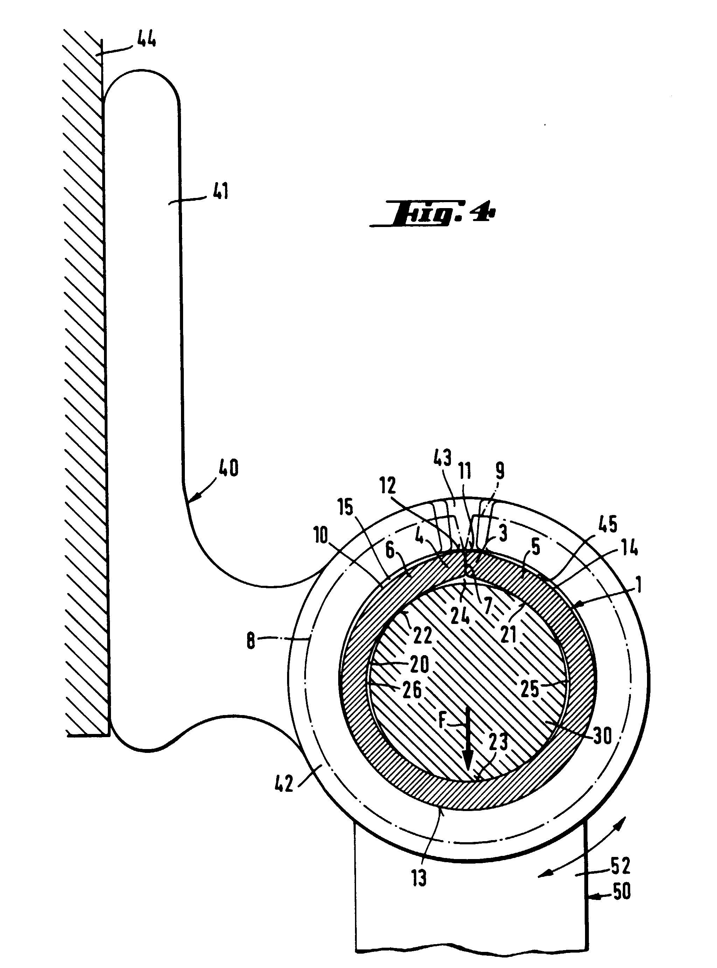

In der Figur 4 ist das zweite Scharnierteil 50 um 90° gegenüber der Stellung in Figur 3 gedreht dargestellt. Diese Stellung würde bei Einbau in einer Kfz-Tür-halterung den Zustand der geöffneten Tür darstellen. In diesem Fall wirken radiale Kräfte F in Richtung auf die Haupttragflächen 23 und 13. Der Bereich der inneren Zwischenräume 25 und 26 sowie die äußeren Zwischenräume 14 und 15, wo die Lagerbuchse nicht mit dem Bolzen 30 bzw. der Wandung der Gehäusebohrung 45 in Berührung steht, sind somit weitgehend unbelastet.

In der Figur 6 ist der Querschnitt durch die in Figur 3 gezeigte Verbindung längs der Linie VI-VI dargestellt. Die Buchse besitzt einen Kragen 8, mit dem die Lagerbuchse 1 auf dem Scharnierkörper 42 aufliegt. Die inneren Zwischenräume 25 und 26 sind übertrieben dargestellt. Tatsächlich liegt der Abstand zwischen der Gehäusebohrung 45 und dem Bolzen 30 in einem Bereich von etwa 1/100 mm.

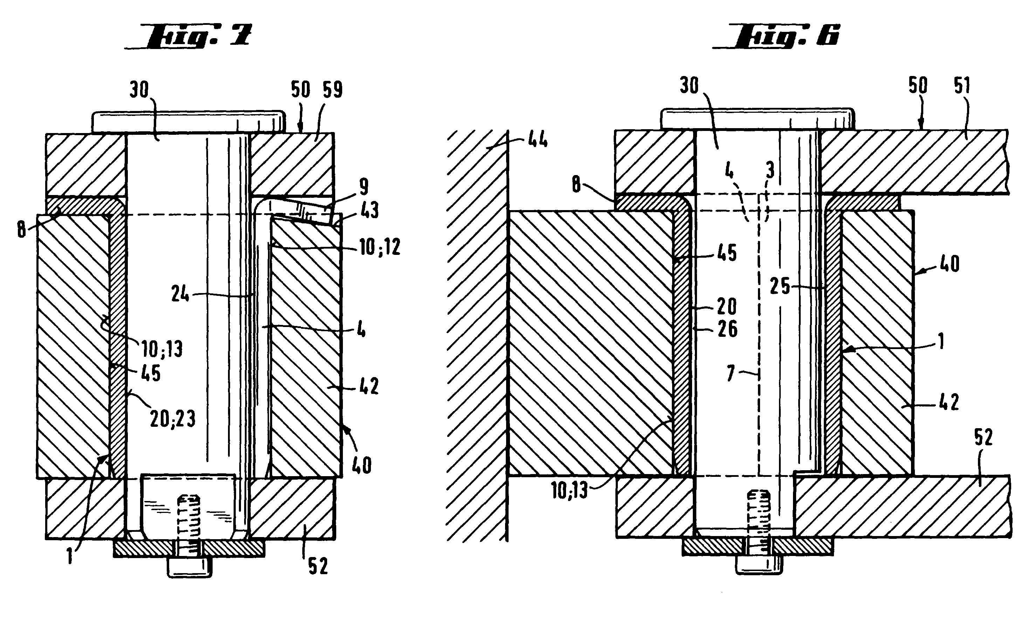

In der Figur 7 ist der Schnitt durch die in Figur 3 gezeigte Verbindung längs der Linie VII-VII dargestellt, die durch die Stoßfuge 7 der Lagerbuchse 1 verläuft. Der Scharnierkörper 42 besitzt im Bereich der Stoßfuge 7 eine Ausnehmung in Form einer Kerbe 43, in die das abgebogene Ende 9 des Kragens 8 als Verdrehsicherung eingreift.

In den Figuren 8 und 9 ist eine Lagerbuchse 100 gemäß der zweiten Ausführungsform dargestellt. Die Lagerbuchse 100, die in Figur 8 im eingebauten Zustand dargestellt ist, besitzt eine polygonale Gestalt mit den drei Polygonpunkten 160, 161 und 162. Die Umfangsabschnitte zwischen den Polygonpunkten 160, 161,162 verlaufen abgeflacht, aber noch gekrümmt. Zwischen der Lagerbuchse 100 und dem Scharnierkörper 142 sind äußere Zwischenräume 114, 115 und 116 ausgebildet. Mit der Außenfläche 110 liegt die Lagerbuchse 100 unter Ausbildung der äußeren Tragflächen 111, 112, 113 an. Der Bolzen 130 berührt die Lagerbuchse an den inneren Tragflächen 121, 122, 123, die sich zwischen den Polygonpunkten 160, 161 und 162 befinden und sich daher mit den äußeren Tragflächen 111, 112, 113 abwechseln.

### Bezugszeichenliste

- 1, 100: Lagerbuchse
- 2: Kreisform
- 3, 103: Platinenende
- 4, 104: Platinenende
- 5, 105: gerader Umfangsabschnitt
- 6,106: gerader Umfangsabschnitt
- 7, 107: Stoßfuge
- 8: Kragen
- 9: Kragenende
- 10, 110: Außenfläche
- 11: äußere Tragfläche
- 12: äußere Tragfläche
- 13, 113: äußere Tragfläche
- 114: äußere Tragfläche
- 115: äußere Tragfläche
- 14, 114: äußerer Zwischenraum
- 15, 115: äußerer Zwischenraum
- 116: äußerer Zwischenraum
- 20, 120: Innenfläche
- 21, 121: innere Tragfläche
- 22, 122: innere Tragfläche
- 23, 123: innere Tragfläche
- 24, 124: innerer Zwischenraum
- 25, 125: innerer Zwischenraum
- 26, 126: innerer Zwischenraum
- 30, 130: Bolzen
- 40: erstes Scharnierteil
- 41: Scharnierlasche
- 42, 142: Scharnierkörper
- 43: Ausnehmung (Kerbe)
- 44: Wand
- 45, 145: Gehäusebohrung
- 50: zweites Scharnierteil
- 51: oberer Tragarm
- 52: unterer Tragarm
- 160: Polygonpunkt
- 161: Polygonpunkt
- 162: Polygonpunkt

## Patentansprüche

1. Lagerbuchse (1, 100) aus elastischem Material als Lagerung für einen Zapfen (30, 130) oder eine Welle zum Einsetzen in eine Gehäusebohrung (45, 145), wobei die Lagerbuchse (1, 100) eine durch gezielte Verformung erhaltene, von der Kreisform (2) abweichende Gestalt aufweist und die Verformung so eingestellt ist, daß die Lagerbuchse (1, 100) in Umfangsrichtung abwechselnd einen Bereich kleineren Durchmessers und einen Bereich größeren Durchmessers aufweist, so daß sie mit einem Teil ihrer Außenfläche (10) an der Wandung der Gehäusebohrung (45, 145) anlegbar ist und zumindest mit einem Teil der Abschnitte, wo die Lagerbuchse (1, 100) nicht mit ihrer Außenfläche (10, 110) an der Wandung der Gehäusebohrung (45, 145) in Anlage bringbar ist, mit ihrer Innenfläche (20, 120) am Zapfen (30, 130) oder an der Welle anlegbar ist, dadurch gekennzeichnet, daß die Lagerbuchse eine gerollte Lagerbuchse (1, 100) ist, deren als gerade Umfangsabschnitte (5, 105, 6, 106) ausgebildete, an der Stoßfuge (7, 107) zusammentreffende Platinenenden (3, 103, 4, 104) durch gezielte Verformung soweit gegenüber der Kreisform (2) nach außen vorstehen, daß beim Einsetzen in die Gehäusebohrung (45, 145) die Lagerbuchse (1, 100) zumindest mit der Hälfte ihrer Außenfläche (10, 110) im Preßsitz flächig an die Wandung der Gehäusebohrung (45, 145) anlegbar ist.

2. Zapfen- oder Wellenverbindung mit einem ersten und einem zweiten Bauteil, wobei das erste Bauteil eine in eine Gehäusebohrung eingepreßte Lagerbuchse trägt und das zweite Bauteil mit einem in der Lagerbuchse gelagerten Zapfen oder einer Welle verbunden ist, dadurch gekennzeichnet, daß die Lagerbuchse eine gerollte Lagerbuchse (1, 100) ist, die eine durch gezielte Verformung erhaltene, von der Kreisform (2) abweichende Gestalt aufweist, wobei die Verformung so eingestellt ist, daß sich die mit aus geraden Umfangsabschnitten (5, 105, 6, 106) gebildeten, an der Stoßfuge (7, 107) zusammentreffenden Platinenenden (3, 103, 4, 104) vorverformte Lagerbuchse (1, 100) beim Einpressen in die Gehäusebohrung (45, 145) unter zumindest teilweiser Zurücknahme der Verformung soweit verformt, daß sie zumindest mit der Hälfte ihrer Außenfläche (10, 110) im Preßsitz flächig unter Ausbildung äußerer Tragflächen (13, 113, 114, 115) an der Wandung der Gehäusebohrung (45, 145) anliegt und zumindest mit einem Teil der Abschnitte, wo die Lagerbuchse (1, 100) nicht mit ihrer Außenfläche (10, 110) an der Wandung der Gehäusebohrung (45, 145) anliegt, mit ihrer Innenfläche (20, 120) am Zapfen (30, 130) oder an der Welle anliegt, und daß die Lagerbuchse (1, 100) derart im ersten Bauteil (40) ausgerichtet ist, daß die maximale, auf die Lagerbuchse (1, 100) wirkende Radialkraft F des zweiten Bauteils (50) im Bereich einer äußeren Tragfläche (13, 113, 114, 115) angreift.

3. Zapfen- oder Wellenverbindung nach Anspruch 2, dadurch gekennzeichnet, daß die Verformung so eingestellt ist, daß der maximale Abstand zwischen der Außenfläche (10, 110) der Lagerbuchse (1, 100) und der Wandung der Gehäusebohrung (45, 145) <5/100 mm beträgt.

4. Zapfen- oder Wellenverbindung nach Ansprüche 2, dadurch gekennzeichnet, daß der maximale Abstand <1/100 mm beträgt.

5. Zapfen- oder Wellenverbindung nach Anspruch 2, dadurch gekennzeichnet, daß die Radialkraft F an der der Stoßfuge (7) gegenüberliegenden Tragfläche (13) angreift.

6. Zapfen- oder Wellenverbindung nach Anspruch 2 oder 5, dadurch gekennzeichnet, daß die als gerade Umfangabschnitte (5, 105, 6, 106) ausgebildeten, sich an der Stoßfuge (7, 107) treffenden Platinenenden durch gezielte Verformung soweit gegenüber der Kreisform (2) nach außen vorstehen, daß beim Einsetzen in die Gehäusebohrung (45, 145) die Lagerbuchse eine äußere Tragfläche aufweist, die mindestens die Hälfte ihrer Außenfläche (10, 110) beträgt.

7. Zapfen- oder Wellenverbindung nach einem der Ansprüche 2 oder 5, dadurch gekennzeichnet, daß die Lagerbuchse (100) durch gezielte Verformung eine polygonale Gestalt aufweist, derenäußere Tragflächen im Bereich der Polygonkanten liegen.

8. Zapfen- oder Wellenverbindung nach Anspruch 7, dadurch gekennzeichnet, daß die Polygonkanten (160, 161, 162) so gelegt sind, daß eine Polygonkante im Bereich der Platinenenden (105, 106) liegt.

9. Zapfen- oder Wellenverbindung nach einem der Ansprüche 7 oder 8, dadurch gekennzeichnet, daß die Lagerbuchse (100) eine polygonale Gestalt mit drei Polygonkanten (160, 161, 162) aufweist.

10. Zapfen- oder Wellenverbindung nach einem der Ansprüche 2 bis 9, dadurch gekennzeichnet, daß die Bauteile (40, 50) Scharniere sind.

## Claims

1. Bearing bush (1, 100) of elastic material as a bearing for a journal (30, 130) or shaft for insertion into a housing bore (45, 145), wherein the bearing bush (1, 100) has a shape which, due to purposeful deformation, deviates from the circular shape (2) and the deformation is such that the bearing bush (1, 100) has in peripheral direction alternately a region of smaller diameter and a region of larger diameter so that it may bear with a part of its outer surface (10, 110) onto the surface of the housing bore (45, 145) and with at least a part of the portions, where the bearing bush (1, 100) cannot be made to bear with its outer surface (10, 110) onto the surface of the housing bore (45, 145), the bush may bear with its inner surface (20, 120) onto the journal (30, 130) or the shaft, characterised in that the bearing bush is a wrapped bearing bush (1, 100) whose butt ends (3, 103, 4, 104), which are formed as straight peripheral portions (5, 105, 6, 106) which meet at the joint (7, 107), project due to purposeful deformation so far outwardly relative to the circular shape (2) that, on being inserted into the housing bore (45, 145), the bearing bush (1, 100) may bear with at least half of its outer surface (10, 110) with interference fit and an area contact onto the surface of the housing bore (45, 145).

2. Journal or shaft connection comprising a first and a second component, wherein the first component carries a bearing bush pressed into a housing bore and the second component is connected to a journal or shaft housed in the bearing bush, characterised in that the bearing bush is a wrapped bearing bush (1, 100) which has a shape which is obtained by purposeful deformation and deviates from the circular shape (2), the deformation being such that when the bearing bush (1, 100), which is preformed with butt ends (3, 103, 4, 104) formed by straight peripheral portions (5, 105, 6, 106) meeting at the joint (7, 107), is pressed into the housing bore (45, 145) it is deformed, with at least partial withdrawal of the deformation, to such an extent that it bears with at least half of its outer surface (10, 110), with interference fit and an area contact forming bearing surfaces (13, 113, 114, 115), onto the surface of the housing bore (45, 145) and with at least a part of the portions where the bearing bush (1, 100) does not bear with its outer surface (10, 110) onto the surface of the housing bore (45, 145) bears with its inner surface (20, 120) on the pin (30, 130) or on the shaft, and that the bearing bush (1, 100) is situated in the first component (40) such that the maximum radial force F of the second component (50) acting on the bearing bush (1, 100) engages in the region of an outer bearing surface (13, 113, 114, 115).

3. Journal or shaft connection according to claim 2, characterised in that the deformation is such that the maximum spacing between the outer surface (10, 110) of the bearing bush (1, 100) and the surface of the housing bore (45, 145) is < 5/100 mm.

4. Journal or shaft connection according to claim 2, characterised in that the maximum spacing is < 1/100 mm.

5. Journal or shaft connection according to claim 2, characterised in that the radial force F engages the bearing surface (13) opposite the joint (7).

6. Journal or shaft connection according to claim 2 or 5, characterised in that the butt ends, which are formed as straight peripheral portions (5, 105, 6, 106) and meet at the joint (7, 107), project due to purposeful deformation so far outwardly relative to the circular shape (2) that, on being inserted into the housing bore (45, 145), the bearing bush has an outer bearing surface which amounts to at least half of its outer surface (10, 110).

7. Journal or shaft connection according to claim 2 or 5, characterised in that the bearing bush (100) has a polygonal shape obtained by purposeful deformation whose outer bearing surfaces are situated in the region of the polygon edges [points].

8. Journal or shaft connection according to claim 7, characterised in that the polygon edges [points] (160, 161, 162) are so situated that one polygon edge [point] lies in the region of the butt ends (105, 106).

9. Journal or shaft connection according to claim 7 or 8, characterised in that the bearing bush (100) has a polygonal shape with three polygon edges [points] (160, 161, 162).

10. Journal or shaft connection according to any one of claims 2 to 9, characterised in that the components (40, 50) are hinges.

## Revendications

1. Coussinet (1, 100) en matériau élastique, servant de palier pour un tourillon, un axe (30, 130) ou un arbre et destiné à être mis en place dans un alésage récepteur (45, 145), coussinet (1, 100) qui présente une forme obtenue par une déformation ciblée et s'écartant de la forme circulaire (2), la déformation ayant été réalisée de manière que le coussinet (1, 100) comporte alternativement, en direction circonférentielle, une zone de plus petit diamètre et une zone de plus grand diamètre, de sorte qu'il puisse être appliqué par une partie de sa surface extérieure (10, 110) contre la paroi de l'alésage récepteur (45, 145), et qu'il puisse être appliqué par sa surface intérieure (20, 120) contre le tourillon ou l'axe (30, 130) ou contre l'arbre par au moins une partie des tronçons où le coussinet (1, 100) n'est pas applicable par sa surface extérieure (10, 110) contre la paroi de l'alésage (45, 145), caractérisé en ce que le coussinet est un coussinet roulé (obtenu par roulage) (1, 100) dont les extrémités (3, 103, 4, 104) du flan en forme de plaquette ou de bande d'où il est formé, extrémités qui se rencontrent au droit du joint (7, 107) et sont constituées par des tronçons circonférentiels droits (5, 105, 6, 106), font radialement saillie vers l'extérieur, par rapport à la forme circulaire (2), par suite d'une déformation ciblée, à tel point que lors de la mise en place dans l'alésage récepteur (45, 145), le coussinet (1, 100) est applicable contre la paroi de l'alésage (45, 145) par au moins la moitié de sa surface extérieure (10, 110) pour établir un ajustage serré sur une surface relativement grande.

2. Assemblage de tourillon, d'axe ou d'arbre comprenant un premier et un deuxième composant, dont le premier porte un coussinet enfoncé dans un alésage récepteur et le deuxième est relié à un tourillon, un axe ou un arbre monté rotatif dans le coussinet, caractérisé en ce que le coussinet est un coussinet roulé (obtenu par roulage) (1, 100) qui présente une forme obtenue par une déformation ciblée et s'écartant de la forme circulaire (2), la déformation ayant été réalisée de manière que le coussinet (1, 100), préalablement déformé et possédant des extrémités (3, 103, 4, 104) du flan en forme de plaquette ou de bande d'où est formé le coussinet, extrémités qui se rencontrent au droit d'un joint (7, 107) et constituent des tronçons circonférentiels droits (5, 105, 6, 106), se déforme à tel point, lors de l'enfoncement dans l'alésage récepteur (45, 145), au cours duquel la déformation est au moins partiellement annulée, qu'il s'applique par la moitié au moins de sa surface extérieure (10, 110), en établissant un ajustement serré de grande surface et avec création de portées externes (13, 113, 114, 115), contre la paroi de l'alésage récepteur (45, 145), et qu'il s'applique par sa surface intérieure (20, 120) contre le tourillon ou l'axe (30, 130), ou contre l'arbre, par une partie au moins des tronçons où le coussinet (1, 100) ne s'applique pas par sa surface extérieure (10, 110) contre la paroi de l'alésage (45, 145), et que le coussinet (1, 100) est orienté dans le premier composant (40) de manière que la force radiale F maximale exercée par le deuxième composant (50) sur le coussinet (1, 100) attaque dans la zone d'une portée externe (13, 113, 114, 115).

3. Assemblage de tourillon, d'axe ou d'arbre selon la revendication 2, caractérisé en ce que la déformation est réalisée de manière que la distance maximale entre la surface extérieure (10, 110) du coussinet (1, 100) et la paroi de l'alésage récepteur (45, 145) soit inférieure à 0,05 mm.

4. Assemblage de tourillon, d'axe ou d'arbre selon la revendication 3, caractérisé en ce que la distance maximale est inférieure à 0,01 mm.

5. Assemblage de tourillon, d'axe ou d'arbre selon la revendication 2, caractérisé en ce que la force radiale F attaque la portée (13) située à l'opposé du joint (7).

6. Assemblage de tourillon, d'axe ou d'arbre selon la revendication 2 ou 5, caractérisé en ce que les extrémités du flan d'où est formé le coussinet, extrémités qui se rencontrent au droit du joint (7, 107) et sont réalisées comme des tronçons circonférentiels droits (5, 105, 6, 106), font saillie vers l'extérieur, par rapport à la forme circulaire (2), par suite de la déformation ciblée, à tel point qu'à la mise en place dans l'alésage récepteur (45, 145), le coussinet présente une portée externe correspondant au moins à la moitié de sa surface extérieure (10, 110).

7. Assemblage de tourillon, d'axe ou d'arbre selon la revendication 2 ou 5, caractérisé en ce que, par suite de la déformation ciblée, le coussinet (100) présente une forme polygonale dont les portées externes sont situées dans la zone des sommets du polygone.

8. Assemblage de tourillon, d'axe ou d'arbre selon la revendication 7, caractérisé en ce que les zones d'angle ou sommets de polygone (160, 161, 162) sont disposés de manière qu'un sommet du polygone soit situé dans la zone des extrémités du flan (105, 106) d'où est formé le coussinet.

9. Assemblage de tourillon, d'axe ou d'arbre selon la revendication 7 ou 8, caractérisé en ce que le coussinet (100) présente une forme polygonale possédant trois sommets de polygone (160, 161, 162).

10. Assemblage de tourillon, d'axe ou d'arbre selon une des revendications 2 à 9, caractérisé en ce que les composants (40, 50) sont des composants d'une charnière.
